# EUROPÄISCHE PATENTANMELDUNG

(11) **EP 2 251 162 A1**
(43) Veröffentlichungstag der Anmeldung: **17.11.2010**
(21) Anmeldenummer: 10405103.2
(22) Anmeldetag: 12.05.2010
(51) Int. Cl.: B27B 19/00, B23D 61/00

(54) **Sägeblatt**

(30) Priorität: 15.05.2009 CH 7632009
(71) Anmelder: Steiger, Marco, 8598 Bottighofen (CH)
(72) Erfinder: Steiger, Marco, 8598 Bottighofen (CH)
(74) Vertreter: Gachnang, Hans Rudolf

(57) **Zusammenfassung**

Das Sägeblatt (5) für eine Werkzeugmaschine (1) mit oszillierendem Abtrieb umfasst eine Zahnung mit Zähnen (7), deren Spitzen auf einem Bogen (9a,9b) liegen. die Zentren Z₂ der Bögen (9a,9b) liegen ausserhalb des Drehzentrums Z₁ des Sägeblattes (5).

## Beschreibung

Gegenstand der vorliegenden Erfindung ist ein Sägeblatt für eine Werkzeugmaschine gemäss Oberbegriff des Patentanspruchs 1.

Sägeblätter für oszillierend arbeitende Werkzeugmaschinen sind zum Beispiel aus der EP 0881023 bekannt.

Die Zähne sind auf einer zum Drehzentrum des Sägeblatts tangential verlaufenden Geraden angeordnet. Aus der EP 0881 023 ist es weiter bekannt, die Zähne auf zwei in einem stumpfen Winkel verlaufenden, sich auf der Mittel- oder Symmetrieachse treffenden Geraden anzuordnen. Bei letzterer Anordnung liegen die zuäusserst ausgebildeten Zähne im gleichen radialen Abstand zu jenem Zahn, an dem sich die beiden Geraden treffen. Die dazwischen liegenden Zähne weisen folglich einen geringeren radialen Abstand vom Drehzentrum auf als die aussen liegenden.

Diese Zahnanordnungen haben den Nachteil, dass die zuäusserst liegenden Zähne vor den auf den geraden Zwischenbereichen liegenden Zähnen in Eingriff mit dem Werkstück gelangen. Dies kann je nach Beschaffung des Werkstücks zu einer unsauberen Schnittlinie führen.

Eine Aufgabe der vorliegenden Erfindung besteht nun darin, an einem Sägeblatt eine Zahngeometrie zu schaffen, die die Nachteile der bekannten behebt und insbesondere beim Einstechen/Einsägen in eine flache Oberfläche einen sauberen und zudem schnellen Schnitt bei geringem Druck ermöglicht.

Gelöst wird diese Aufgabe durch ein Sägeblatt mit den Merkmalen des Patentanspruchs 1.

Durch mindestens einen im Zentrum der Zahnreihe angeordneten, die benachbarten Zähne radial überragenden Zahn gelingt es, den Sägeschnitt im wesentlichen im Zentrum von dessen Länge zu beginnen und sukzessive abzusenken. Die vom zentral liegenden Sägezahn aus dem Werkstück herausgeschnittenen Späne können seitlich abgeführt werden und werden durch die benachbarten Zähne nicht mehr durch den Einschnitt hindurchgeführt. Die benachbarten, etwas radial zurückversetzen Zähne greifen sehr sanft und sukzessive ins Werkstück ein und ermöglichen eine äusserst saubere Schnittlinie. Insbesondere wird auch die Seitenkante des Einstichs durch die letzten, radial zurückversetzten Zähne sehr sauber geschnitten.

Anhand eines illustrierten Ausführungsbeispiels wird die Erfindung näher erläutert. Es zeigen
- Figur 1: eine Aufsicht auf eine Werkzeugmaschine mit daran befestigtem oszillierend antreibbarem Sägeblatt gemäss dem Stand der Technik,
- Figur 2: ein Sägeblatt gemäss dem Stand der Technik mit in stumpfem Winkel zueinander auf Geraden liegenden Zähnen gemäss dem Stand der Technik,
- Figur 3: ein Sägeblatt nach der Erfindung mit mindestens einem im Zentrum liegenden, radial die benachbarten Spitzen überragendem Sägezahn,
- Figuren 4a und 4b: einen Ausschnitt aus den Zahnreihen rechts und links des mittleren Zahns (der Einfachheit halber alle Zähne gleich gross dargestellt),
- Figur 5: einen Ausschnitt aus der Zahnreihe in einer weiteren Ausgestaltung mit auf beide Seiten wirkenden Zahngeometrien.

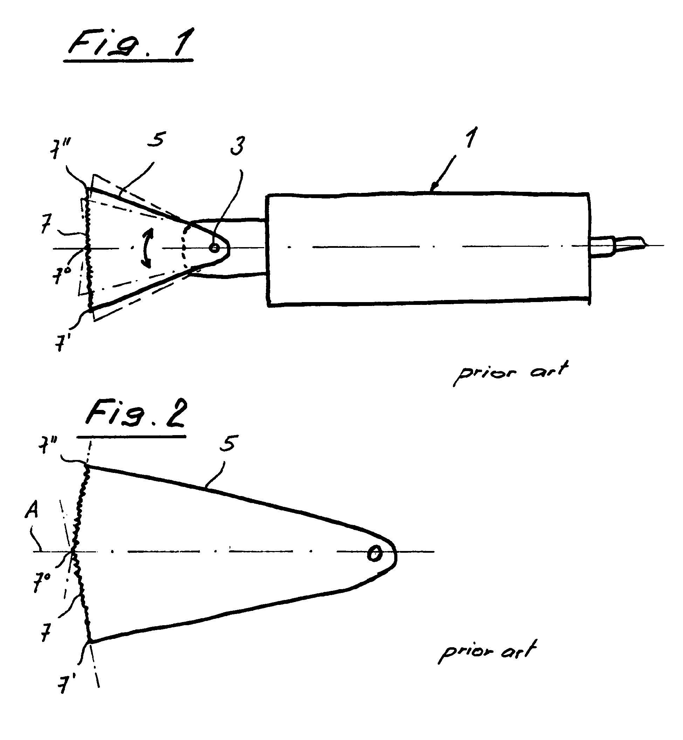

In Figur 1 ist mit Bezugszeichen 1 eine Werkzeugmaschine bezeichnet, an deren Abtriebswelle 3 ein Sägeblatt 5 aufgesetzt ist. Das Sägeblatt 5 wird von der Abtriebswelle 3 oszillierend angetrieben (siehe in gebrochenen Linien angedeutete Schwenkextreme des Sägeblatts 5). Das Sägeblatt 5 weist eine Zahnung 7 auf, deren Zähne auf einer Geraden liegen. Durch die Oszillation bewegen sich die beiden äussersten Zähne 7' und 7" auf einem Kreisbogenabschnitt, dessen Radius wesentlich grösser ist als die Kreisbögen, auf denen sich die dazwischen liegenden Zähne bewegen.

In Figur 2 ist das Sägeblatt 5 mit einer zweigeteilten Zahnung 7 versehen. Die Zähne liegen dort auf zwei sich auf der Mittelachse A kreuzenden Geraden. Durch diese Massnahme bewegen sich die zuäusserst liegenden Zähne 7' und 7" sowie der im Zentrum auf der Mittelache A liegende Zahn 7° auf einem gemeinsamen Kreisbogen.

Sowohl beim Sägeblatt 5 in Figur 1 als auch beim Sägeblatt 5 in Figur 2 schlagen die zuäusserst liegenden Zähne 7' und 7" beim Eindringen in eine ebene Platte im wesentlichen rechtwinklig auf diese auf, was zu einem unsauberen Schnitt führen kann.

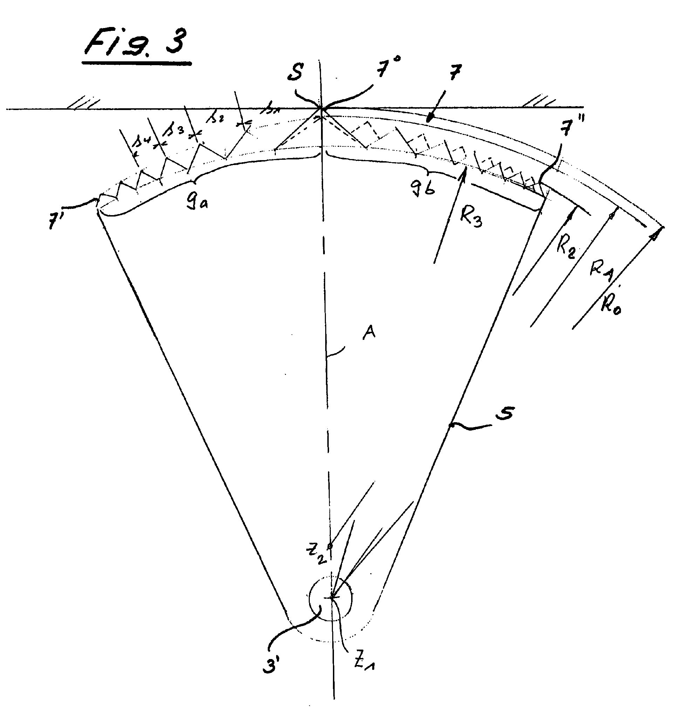

In Figur 3 ist ein erfindungsgemässes Sägeblatt 5 dargestellt. Die Zahnung setzt sich dabei aus einer Vielzahl von Zähnen 7 zusammen, deren Spitzen auf Bögen 9a,9b, vorzugsweise Kreisbögen, mit Radius R2 liegen. Das Drehzentrum Z₂ der beiden Bögen 9a,9b liegt z.B. über dem Drehzentrum Z des Sägeblatts auf der Abtriebswelle 3 der Werkzeugmaschine 1.

Liegt das Drehzentrum Z₂ der Bögen 9a und 9b oberhalb des Drehzentrums Z₁ des Sägeblattes 5, so sind die Radien R₂ kleiner als der Radius R₁ oder R₁ oder R₀ der Spitze S eines zentralen Zahns 7°. Werden die Zentren Z₂ der Radien R₂ der Bögen hingegen neben das Schwenkzentrum Z₁ des Sägeblattes 5 gelegt, so sind die Radien R₂ der Bögen 9a und 9b grösser als der Bogen R₁ bzw. R₀.

Die beiden Bögen 9a,9b mit Radius R₂ treffen sich auf der Mittelachse A. Der mindestens eine auf oder sehr nahe an der Mittelachse A liegende zentrale Zahn 7° liegt im Schnittpunkt der beiden Bögen mit Radius R₂ (Zahn 7° ist in gebrochenen Linien dargestellt) und bewegt sich auf einem Bogen mit R₁ oder er überragt mit seiner Spitze S den Schnittpunkt der beiden Bögen und bewegt sich bei oszillierendem Antrieb auf einem Kreisbogenabschnitt mit Radius R₀ um das Drehzentrum Z₁.

Die Spitzen der zwischen dem zentralen Zahn 7° und den zuäusserst liegenden Zähnen 7' und 7", die auf den Kreisbögen 9a,9b mit Radius R₂ liegen, beginnen nahe der Mittelachse A und werden sukzessive kleiner, d.h. deren Wurzeln weisen eine kleinere tangentiale Länge auf. Die Wurzeln der Zähne können auf einem Kreisbogen um das Zentrum Z mit Radius R₃ liegen. Selbstverständlich könnten alle ausserhalb des zentralen Zahns 7° liegenden Zähne die gleiche radiale Länge aufweisen, solange deren Spitzen auf Bögen 9a,9b mit Zentrum Z₂ liegen. Generell liegen die Zentren Z₂ der Bögen 9a,9b ausserhalb des Drehzentrums Z₁ des Sägeblattes 5.

In der schematischen Darstellung des Sägeblatts 5 in Figur 3 sind die Zähne 7 der Einfachheit halber schematisch als Dreiecke dargestellt. Im weiteren ist nur eine in einer Ebene liegende Zahnreihe sichtbar. Selbstverständlich könnte versetzt dazu eine zweite Zahnreihe vorgesehen sein, deren Spitzen in der Aufsicht zwischen den Spitzen der davor liegenden Zahnreihe liegen. Eine solche zweite, versetzt und/oder hinter der ersten Zahnreihe liegende Zahnreihe ist auf der rechten Hälfte des Sägeblatts in Figur 3 in gebrochene Linien angedeutet.

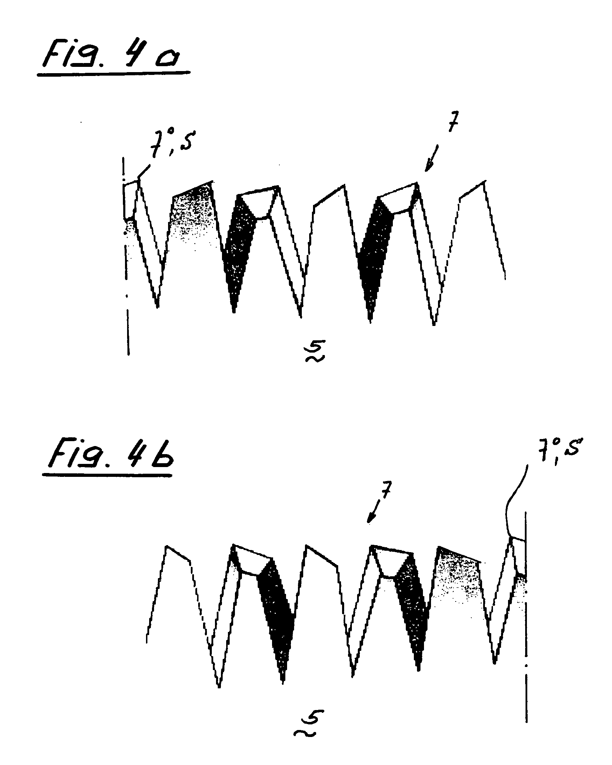

In den Figuren 4a und 4b sind Zähne 7 mit einer möglichen Zahnform dargestellt. Der Einfachheit halber sind die Spitzen der Zähne 7 auf einer Geraden angeordnet und alle gleich hoch. Erfindungsgemäss sind jedoch deren Spitzen auf Bögen 9a,9b liegend. Den Figuren 4a und 4b kann entnommen werden, dass beispielsweise die aussen liegenden Flanken der Zähne in der Ebene der Stirnflächen des Sägeblattes 5 liegen und deren Spitzen schräg nach innen angeschliffen sind. Dadurch wird erreicht, dass die Schnittkanten sehr sauber geschnitten werden können. Bei einer Ausgestaltung der Zähen gemäss den Figuren 4a (rechte Seite des Sägeblatts 5) und Figur 4b (linke Seite des Sägeblatts) erfolgen die Schnitte jeweils nur in einer Richtung.

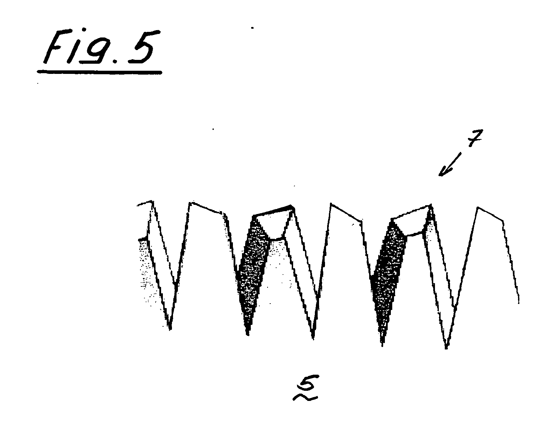

In der Darstellung gemäss Figur 5 sind abwechslungsweise die Zähne in unterschiedlichen Richtungen geschliffen, so dass sowohl bei einer Linksdrehung als auch bei einer Rechtsdrehung jeweils auf etwa gleicher Höhe ein Schnitt erfolgt.

Die in den Figuren 4 und 5 dargestellten Geometrien der Zahnschneiden sind rein beispielhaft und es können andere geeignete, dem zu bearbeitenden Werkstück angepasste Schnittgeometrien eingesetzt werden.

Der zentral angeordnete Zahn 7° kann auch ein Doppelzahn sein, d.h. leicht versetzt zueinander sind zwei Zähne zur Achse A angeordnet, wobei deren Schneiden in den beiden Schnittrichtungen einander entgegengesetzt ausgebildet sind (keine Abbildung).

In einer weiteren Ausgestaltung der Erfindung, insbesondere für sehr harte Werkstücke können die Zähne als Ganzes oder partiell aus einem härterem Material als Stahl hergestellt sein. Die Zähne können auch mit geeigneten Beschichtungen versehen sein.

## Patentansprüche

1. Sägeblatt (5) für eine Werkzeugmaschine (1) mit oszillierendem Antrieb, dessen Zähne (7) zur Mittelachse A des Sägeblatts (5) spiegelbildlich angeordnet sind, **dadurch gekennzeichnet, dass** die Spitze S des auf der Mittelachse A liegenden Zahns oder Zahnpaares (7°) radial weiter vom Drehzentrum Z₁ des Sägeblatts (5) entfernt liegt als alle übrigen Zähne (7'-7").

2. Sägeblatt nach Anspruch 1 **dadurch gekennzeichnet, dass** die Spitzen der übrigen Zähne (7'-7") auf einer bogenförmig verlaufenden Linie (9a,9b) liegen.

3. Sägeblatt nach Anspruch 2, **dadurch gekennzeichnet, dass** die Spitzen der übrigen Zähne (7'-7") auf jeder Seite der Mittelachse A jeweils auf einem Kreisbogen (9a,9b), dessen Zentrum Z₂ nicht mit dem Drehzentrum Z₁ des Sägeblattes (5) identisch ist.

4. Sägeblatt nach einem der Ansprüche 1 bis 3, **dadurch gekennzeichnet, dass** die Rücken der Zähne (7°,7'-7") abwechslungsweise auf der vorderen und hinteren Oberfläche des Sägeblatts (5) liegen.
